# FASCICULE DE BREVET EUROPEEN

(11) **EP 4 022 174 B1**
(45) Date de publication et mention de la délivrance du brevet: **26.06.2024**
(21) Numéro de dépôt: 20775385.6
(22) Date de dépôt: 26.08.2020
(51) Int. Cl.: F01D 7/00, F01D 1/30, F02K 1/56, F01D 17/00, F02C 7/042, F02K 1/66, F02C 6/08, F02K 3/075

(54) **TURBOMACHINE A DOUBLE FLUX POUR UN AERONEF**
MANTELSTROMTRIEBWERK FÜR EIN FLUGZEUG
BYPASS TURBOMACHINE FOR AN AIRCRAFT

(30) Priorité: 29.08.2019 FR 1909518
(43) Date de publication de la demande: 06.07.2022
(73) Titulaire: SAFRAN AIRCRAFT ENGINES, 75015 Paris (FR)
(72) Inventeur: LEBEAULT, Eva, Julie, 77550 MOISSY-CRAMAYEL (FR); BINDER, Anthony, 77550 MOISSY-CRAMAYEL (FR); SOULAT, Laurent, 77550 MOISSY-CRAMAYEL (FR)
(74) Mandataire: Gevers & Orès
(86) Numéro de dépôt international: PCT/FR2020/051502
(87) Numéro de publication internationale: WO 2021/038169

(56) Documents cités:
- EP-A1- 3 205 868
- US-A- 4 371 132
- US-A1- 2018 135 557

## Description

### Domaine technique de l'invention

La présente invention concerne une turbomachine à double flux pour un aéronef.

### Arrière-plan technique

L'état de la technique comprend notamment le document US-A1-2018/135557.

Un ensemble propulsif comprend par exemple une turbomachine à double flux intégrée dans une nacelle, la turbomachine comprenant d'amont en aval, au moins une soufflante et un générateur de gaz comportant par exemple un ou plusieurs étages de compresseur, basse pression et haute pression, une chambre de combustion, un ou plusieurs étages de turbine, haute pression puis basse pression. Dans un mode de fonctionnement dit de « propulseur » de l'ensemble propulsif, par exemple lorsque l'aéronef est en croisière, le flux d'air généré par la soufflante est divisé, par un séparateur (ou bec de séparation), en un flux d'air primaire et un flux d'air secondaire circulant d'amont en aval. Plus précisément, le flux primaire s'écoule dans une veine primaire annulaire du générateur de gaz et le flux d'air secondaire s'écoule dans une veine secondaire annulaire délimitée radialement entre le générateur de gaz et la nacelle, et participant de manière prépondérante à la poussée fournie par l'ensemble propulsif. Par convention, dans la présente demande, les termes « amont » et « aval » sont définis par rapport au sens de circulation des gaz dans l'ensemble propulsif lorsque ce dernier fonctionne en mode « propulseur ». De même, par convention dans la présente demande, les termes « interne » et « externe » sont définis radialement par rapport à l'axe longitudinal de la turbomachine, qui est notamment l'axe de rotation des rotors des compresseurs et des turbines. Pour diminuer la consommation en carburant de l'ensemble propulsif, les motoristes cherchent continuellement à accroître le taux de dilution communément appelé BPR pour « ByPass Ratio » de l'ensemble propulsif, ce dernier correspondant au quotient du débit d'air dans la veine secondaire et dans la veine primaire. Pour répondre à cet objectif, il est notamment possible d'avoir une soufflante munie de pales à calage variable de manière à régler le calage (et plus précisément l'angle de calage) des pales en fonction des paramètres de vol, et ainsi, de manière générale, optimiser le fonctionnement de l'ensemble propulsif. Le fait d'avoir des pales à calage variable permet en outre, dans un mode de fonctionnement dit de « reverse », d'utiliser ces dernières pour générer une contre-poussée, et ainsi de participer au ralentissement de l'aéronef en complément des freins de manière à réduire sa distance de freinage lors de l'atterrissage. Ainsi, en mode de fonctionnement propulseur, le calage des aubes de la soufflante est généralement considéré comme positif et, en mode de fonctionnement reverse, le calage des aubes est généralement considéré comme négatif. Contrairement à une soufflante munie de pales à calage fixe qui nécessite l'ajout d'inverseurs de poussée (par exemple d'inverseurs à portes pivotantes et/ou capots coulissants incorporés dans la nacelle) pour générer cette contre-poussée lors de l'atterrissage de l'aéronef, une turbomachine comportant une soufflante munie de pales à calage variable ne comprend pas d'inverseurs de poussée dans sa structure, au bénéfice de la masse de la turbomachine. En mode de fonctionnement reverse, le flux secondaire circule d'aval en amont dans la veine secondaire, une première partie du flux secondaire étant utilisée pour alimenter la veine primaire du générateur de gaz dans laquelle le flux d'air circule quant à lui toujours d'amont en aval, une deuxième partie du flux secondaire s'échappant de l'ensemble propulsif via la soufflante de manière à générer une contre-poussée. Par retour d'expérience, en référence à la première partie du flux secondaire pénétrant dans la veine primaire en contournant le bec de séparation, on constate l'apparition de zones de décollement du flux d'air au niveau du bec. En mode de fonctionnement reverse, ces zones de décollement dégradent fortement le rendement du générateur de gaz, et de manière générale de la turbomachine. Selon le régime moteur utilisé, ces zones de décollement peuvent mettre en péril le fonctionnement du générateur de gaz.

La présente invention a notamment pour but de résoudre tout ou partie des problèmes précités.

### Résumé de l'invention

L'invention propose à cet effet une turbomachine à double flux pour un aéronef, selon la revendication 1, la turbomachine comportant une soufflante carénée et un générateur de gaz, la soufflante étant configurée pour générer un flux primaire d'air dans une veine primaire à l'intérieur du générateur de gaz, et un flux secondaire dans une veine secondaire s'étendant autour du générateur de gaz et à l'intérieur d'un carter de soufflante, la soufflante comportant des aubes à calage variable qui sont aptes à adopter une position d'inversion de poussée entraînant un écoulement d'un flux inverse d'air dans la veine secondaire, le générateur de gaz étant relié au carter de soufflante par un aubage statorique qui traverse la veine secondaire, le générateur de gaz comportant deux carters annulaires, respectivement externe et interne, s'étendant l'un autour de l'autre, le carter externe délimitant intérieurement au moins en partie la veine secondaire et étant relié à l'aubage statorique, et le carter interne délimitant extérieurement au moins en partie la veine primaire, la turbomachine comportant en outre des premières ouvertures d'entrée d'air du flux inverse situées sur le carter externe, et des secondes ouvertures de sortie de cet air situées sur le carter interne, au moins une partie desdites premières ouvertures étant située dans un plan perpendiculaire à un axe longitudinal de la turbomachine passant dans une zone située au milieu dudit aubage selon une direction axiale, et des volets étant prévus au niveau desdites premières et secondes ouvertures et étant mobiles entre des positions de fermeture et de libération de ces ouvertures, lesdits volets étant mobiles en pivotement, ayant une fonction écopante et étant configurés pour s'étendre au moins en partie dans ladite veine secondaire lorsqu'ils sont en position de libération de sorte que les extrémités radialement externes des volets sont situées à une dimension radiale dans la veine secondaire, ladite turbomachine étant caractérisée en ce que la dimension radiale représente entre 20 et 30% de la dimension radiale totale de la veine secondaire, ces dimensions étant mesurées depuis le carter externe au droit des extrémités radialement externes.

Selon l'invention, lesdites premières ouvertures sont situées dans un plan perpendiculaire à un axe longitudinal de la turbomachine passant sensiblement au milieu dudit aubage.

Les premières et secondes ouvertures ainsi que le positionnement des premières ouvertures vis-à-vis dudit aubage permettent non seulement d'optimiser l'écoulement du flux d'air prélevé lors de son passage de la veine secondaire à la veine primaire mais également de fournir le débit d'air adéquat dans la veine primaire lorsque la turbomachine fonctionne en mode « reverse », au bénéfice du rendement et de la durée de vie de la turbomachine.

La turbomachine selon l'invention peut comprendre une ou plusieurs des caractéristiques ci-dessous, prises isolément les unes des autres ou en combinaison les unes avec les autres :
- des ailettes de guidage sont situées dans lesdites premières ouvertures et/ou dans lesdites secondes ouvertures et/ou entre lesdites premières et secondes ouvertures ; et
- l'aubage statorique comprend des bras structuraux et des aubes de redressement de flux, les bras comportant des bords de fuite en aval des bords de fuites des aubes par rapport audit flux primaire, lesdites premières ouvertures étant situées entre les bras et au moins en partie en aval des bords de fuite des aubes.

### Brèves description des figures

L'invention sera mieux comprise et d'autres détails, caractéristiques et avantages de l'invention, apparaîtront plus clairement à la lecture de la description suivante faite à titre d'exemple non limitatif et en référence aux dessins annexés dans lesquels :
[Fig.1] la figure 1 est une vue schématique, en coupe longitudinale, d'un ensemble propulsif comprenant une turbomachine fonctionnant selon un mode dit de « propulseur » ;
[Fig.2] la figure 2 est une vue schématique, en coupe longitudinale, de l'ensemble propulsif comprenant une turbomachine fonctionnant selon un mode dit de « reverse » ;
[Fig.3] la figure 3 est une vue schématique partielle, en coupe longitudinale, d'une variante de réalisation d'une turbomachine selon l'invention ;
[Fig.4] la figure 4 est une vue schématique partielle, en coupe longitudinale, d'une variante de réalisation d'une turbomachine selon l'invention ;
[Fig.5] la figure 5 est une vue schématique partielle, en coupe longitudinale, d'une variante de réalisation d'une turbomachine selon l'invention ;
[Fig.6] la figure 6 est une vue schématique partielle, en coupe longitudinale, d'une variante de réalisation d'une turbomachine selon l'invention ;
[Fig.7] la figure 7 est une vue schématique partielle, en coupe longitudinale, d'une variante de réalisation d'une turbomachine selon l'invention ;
[Fig.8] la figure 8 est une vue schématique partielle, en coupe longitudinale, d'une variante de réalisation d'une turbomachine selon l'invention ;
[Fig.9] la figure 9 est une vue schématique partielle, en coupe longitudinale, d'une variante de réalisation d'une turbomachine selon l'invention ;
[Fig.10] la figure 10 est une vue schématique partielle, en coupe longitudinale, d'une variante de réalisation d'une turbomachine selon l'invention ;
[Fig.11] la figure 11 est une vue schématique partielle, en coupe longitudinale, d'une variante de réalisation d'une turbomachine selon l'invention ;
[Fig.12] la figure 12 est une vue schématique partielle, en coupe longitudinale, d'une variante de réalisation d'une turbomachine selon l'invention ;
[Fig.13] la figure 13 est une vue schématique partielle, en coupe longitudinale, d'une variante de réalisation d'une turbomachine selon l'invention ;
[Fig.14] la figure 14 représente schématiquement en vue de dessus un aubage statorique et des premières ouvertures d'une turbomachine selon l'invention ;
[Fig.15] la figure 15 est une vue schématique partielle, en coupe longitudinale, d'un autre mode de réalisation d'une turbomachine selon l'invention ;
[Fig.16] la figure 16 est une vue schématique partielle, en coupe longitudinale, d'un autre mode de réalisation d'une turbomachine selon l'invention ; et
[Fig.17] la figure 17 est une vue schématique partielle, en coupe longitudinale, d'un autre mode de réalisation d'une turbomachine selon l'invention.

### Description détaillée de l'invention

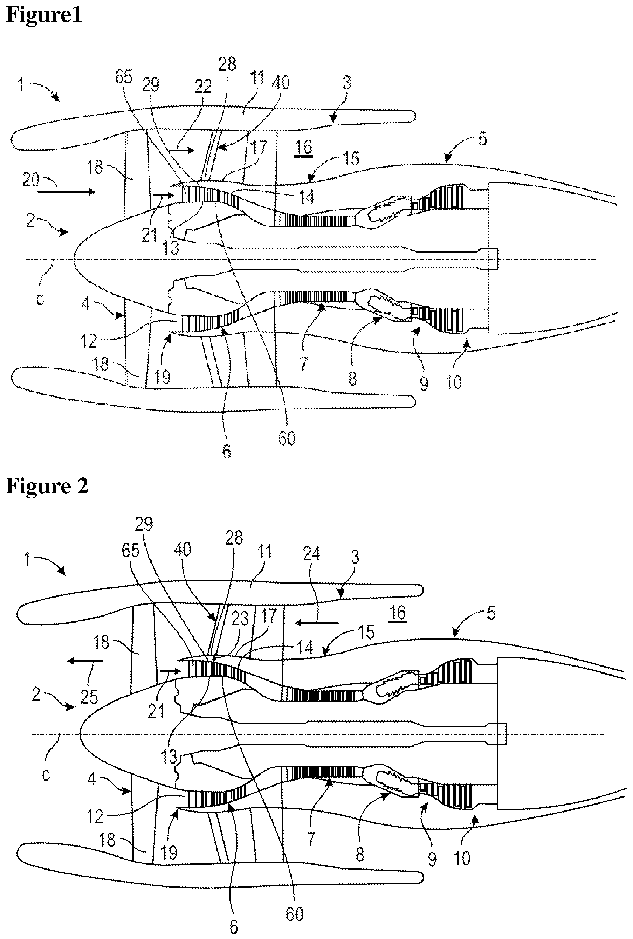

Sur la figure 1 est représenté un ensemble 1 propulsif, notamment pour aéronef, comprenant une nacelle 11 et une turbomachine 2 à double flux intégrée dans un carter de soufflante 3, la turbomachine 2 comprenant d'amont en aval, une soufflante 4 carénée et un générateur 5 de gaz comportant plusieurs étages de compresseur, basse pression 6 et haute pression 7, une chambre 8 de combustion, et plusieurs étages de turbine, haute pression 9 puis basse pression 10. Le générateur 5 de gaz comprend un carter externe 17 et un carter interne 14 s'étendant l'un autour de l'autre et se rejoignant au niveau d'un bec 19. Le carter interne 14 et le carter externe 17 présente un axe C de révolution confondu avec un axe longitudinal de la turbomachine 2, qui est notamment l'axe de rotation des rotors de la soufflante 4, des compresseurs 6, 7 et des turbines 9, 10.

La turbomachine 2 comprend en outre d'une part une veine 12 primaire annulaire du générateur 5 de gaz délimitée radialement entre un carter 13 des rotors mobiles de la turbomachine 2 et le carter interne 14, et d'autre part une veine 16 secondaire annulaire délimitée radialement entre le carter externe 17 et le carter de soufflante 3. Le carter externe 17 délimite ainsi intérieurement au moins en partie la veine externe 16, et le carter interne 14 délimite extérieurement au moins en partie la veine interne 12. Dans la suite de la description, les flux d'air circulant dans les veines 12, 16 primaire et secondaire sont respectivement nommés flux primaire et flux secondaire. Les entrées et sorties de ces veines interne 12 et externe 16 sont configurées afin de limiter les variations de courbures et éviter des décollements des flux primaire et secondaire.

Le générateur de gaz 5 notamment au niveau de son carter externe 17, est relié au carter de soufflante 3 par un aubage statorique 40 qui traverse la veine secondaire 16.

La soufflante 4 est entourée par le carter de soufflante 3 et comporte des aubes 18 à calage variable qui sont aptes à adopter une position d'inversion de poussée entraînant un écoulement d'un flux inverse d'air dans la veine secondaire 16. Le calage d'une aube est quantifié via l'angle de calage qui correspond à l'angle, dans un plan longitudinal (qui peut être normal à la direction radiale de l'aube), entre la corde de l'aube 18 et le plan de rotation de la soufflante 4. Sur la figure 1 est représentée la turbomachine 2 fonctionnant en mode « propulseur ». Un flux d'air 20 généré par la soufflante 4 (circulant d'amont en aval) est ici divisé, par le bec 19 de séparation séparant les veines primaire 12 et secondaire 16 en un flux d'air primaire 21 et un flux d'air secondaire 22 circulant d'amont en aval. Le flux d'air primaire 21 circule ainsi dans la veine primaire 12 à l'intérieur du générateur de gaz 5 et le flux d'air secondaire 22 circule dans la veine secondaire 16. Le flux secondaire 22 participe de manière prépondérante à la poussée fournie par la turbomachine 2. L'angle de calage des aubes 18 de la soufflante 4 est ici positif, les flux primaire 21 et secondaire 22 générant alors une poussée positive, c'est-à-dire une poussée dont la résultante axiale est orientée de l'aval vers l'amont. Ce mode de fonctionnement est par exemple utilisé lorsque l'aéronef est en phase de décollage et/ou de croisière.

Sur la figure 2 est représenté la turbomachine 2 fonctionnant en mode « reverse » (ou « inversion de poussée »). L'angle de calage des aubes 18 de la soufflante 4 est ici négatif. La soufflante 4 génère alors un flux d'air secondaire inverse 24 circulant d'aval en amont dans la veine 16 secondaire. Une première partie 23 du flux secondaire inverse 24 est utilisée pour alimenter la veine 12 primaire du générateur 5 de gaz dans laquelle le flux d'air primaire 21 circule quant à lui toujours d'amont en aval. Une seconde partie 25 du flux 24 secondaire inverse s'échappe quant à elle de la turbomachine 2 via la soufflante 4 de manière à générer une poussée négative (ou contre-poussée), c'est-à-dire une poussée dont la résultante axiale est orientée de l'amont vers l'aval, et ainsi participer au ralentissement de l'aéronef en complément des freins de manière à réduire sa distance de freinage lors de l'atterrissage. Cette inversion du sens du flux est principalement réalisée grâce aux coupes situées entre 30% et 100% de hauteur des aubes à calage variable 18 (les hauteurs d'aubes étant mesurées radialement par rapport à l'axe longitudinal C de la turbomachine, depuis leurs pieds ou extrémités radialement internes). En revanche, ce nouveau calage implique une désadaptation des coupes en pied d'aubes (de 0% à 30% de la hauteur des aubes à calage variable 18) vis-à-vis du flux primaire situé juste en aval, induisant une obstruction. L'écoulement provenant de l'amont de la turbomachine 2 peut ne plus alimenter convenablement le flux primaire et il est donc important que la première partie 23 du flux 24 secondaire inverse utilisée pour alimenter la veine 12 primaire du générateur 5 de gaz soit bien orientée dans la veine primaire 12. La turbomachine 2 comprend notamment pour cela des premières ouvertures 28 d'entrée d'air du flux secondaire inverse 24 situées sur le carter externe 17, et des secondes ouvertures 29 de sortie de cet air situées sur le carter interne 14 et configurées pour alimenter la veine 12 primaire lorsque la turbomachine 2 fonctionne en mode « reverse ». Selon l'invention, les premières ouvertures 28 sont situées dans un plan P perpendiculaire à l'axe longitudinal C de la turbomachine 2 passant sensiblement au milieu de l'aubage 40. Par « milieu » de l'aubage, on entend une zone située sensiblement au milieu de l'aubage 40 selon une direction axiale.

La première partie de flux d'air 23 peut donc entrer dans le générateur de gaz 5, directement au niveau de l'aubage 40. La première partie de flux d'air 23 entre dans la veine primaire avant un aubage 60 reliant le carter interne 14 au carter 13 des rotors mobiles. Il n'est pas nécessaire que la première partie de flux d'air 23 arrive dans la veine primaire en amont d'un redresseur 65 qui redresse habituellement l'écoulement dévié par les aubes à calage variable 18. Le nombre de premières et secondes ouvertures, 28, 29 leurs longueurs et leurs répartitions axiales dépendra du besoin de débit du générateur de gaz 5 en fonctionnement « reverse ».

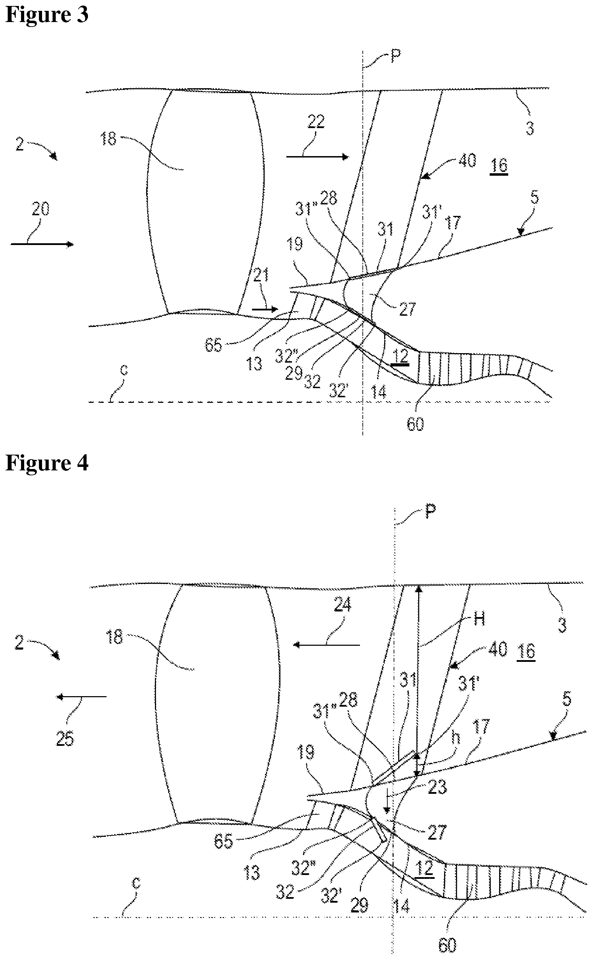

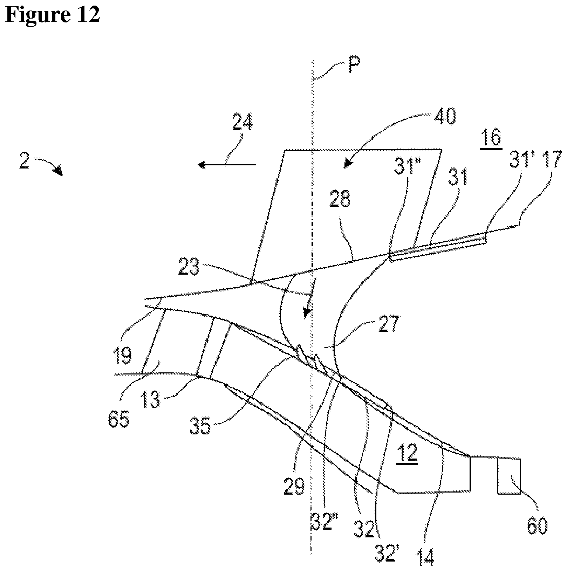

Comme mieux visible sur les figures 3 à 13, la turbomachine 2 comprend par exemple des premiers et seconds volets 31, 32. Ils sont notamment prévus respectivement au niveau des premières 28 et secondes 29 ouvertures et sont mobiles entre des positions de fermeture (figure 3) et de libération (figures 4 à 13) de ces ouvertures 28, 29.

Sur la figures 3, on remarque que les premiers et seconds volets 31, 32 sont en positions de fermeture. On entend par position de fermeture, une position dans laquelle les premiers et seconds volets 31, 32 obturent totalement les premières et secondes ouvertures 28, 29 respectivement. C'est-à-dire que les premières et secondes ouvertures 28, 29 sont rendues étanches à l'air par les volets 31, 32. Cette position de fermeture, correspond notamment à un mode de fonctionnement « propulseur » de la turbomachine 2 illustré à la figure 1. Les premiers et seconds volets 31, 32 comprennent respectivement des extrémités aval 31', 32' et des extrémités amont 31", 32" définies lorsque les premiers et seconds volets 31, 32 sont en position de fermeture.

Selon les modes de réalisation de l'invention illustrés sur les figures 4 à 9, les premiers et seconds volets 31, 32 sont par exemple mobiles en pivotement. On comprend ici qu'ils passent de la position de libération à la position de fermeture et inversement par un ou plusieurs mouvement de pivot.

Dans les exemples de réalisation illustrés sur les figures 4 à 6, les premiers volets 31 des premières ouvertures 28 ont par exemple une fonction écopante et sont configurés pour s'étendre au moins en partie dans la veine secondaire 16 lorsqu'ils sont en position de libération. On comprend ici que la première partie 23 du flux 24 secondaire inverse va être capté par les premiers volets 31, notamment par une face interne des premiers volets 31, de manière à être dirigé à travers le carter externe 17 et le carter interne 14 par un conduit 27 jusqu'à être distribué dans la veine interne 12 par l'intermédiaire des secondes ouvertures 29. Pour assurer cette fonction écopante, les premiers volets 31 sont notamment montés en pivot sur le carter externe 17 par l'intermédiaire de leurs extrémités amont 31". Ils pivotent alors vers l'extérieur en passant de leur position de fermeture à leur position de libération. Cette configuration permet de faciliter l'entrée de la partie de flux 23 dans la veine primaire 12. Les seconds volets 32 peuvent également être montés en pivot sur le carter interne 14 par l'intermédiaire de leurs extrémités amont 32". Ils pivotent alors vers l'intérieur en passant de leur position de fermeture à leur position de libération. Ainsi, en position de libération, les seconds volets 32 sont configurés pour s'étendre au moins en partie dans la veine primaire 12. Les seconds volets 32 vont ainsi diriger le flux d'air 23 capté par les premiers volets 31 dans la direction normale d'écoulement du flux d'air dans la veine primaire 12.

Les extrémités aval 31' des premiers volets 31, c'est-à-dire radialement externes lorsque les premiers volets 31 sont en position de libération sont situées à une dimension radiale h dans la veine secondaire 16 qui représente entre 0 et 30% et de préférence entre 20 et 30% de la dimension radiale totale H de cette veine 16, ces dimensions étant mesurées depuis le carter externe 17 au droit de ces extrémités 31'. De la même manière, les extrémités aval 32' des seconds volets 32, c'est-à-dire radialement internes lorsque les seconds volets 32 sont en position de libération, sont situées à une dimension radiale dans la veine primaire 12, cette dimension étant mesurée depuis le carter interne 14 au droit de ces extrémités 32'.

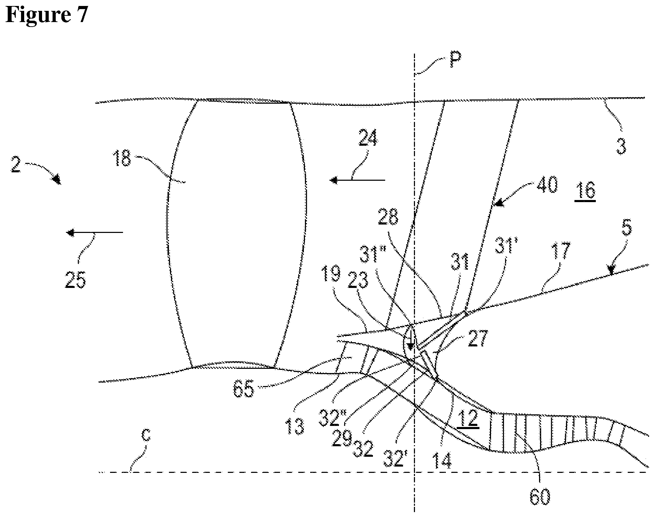

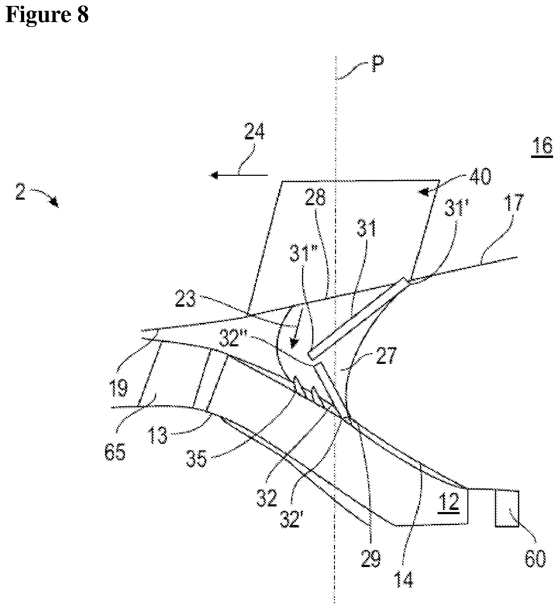

Sur les exemples de réalisations illustrées sur les figures 7 et 8, les premiers et seconds volets 31, 32 sont également mobiles en pivotement entre leur position de fermeture et leur position de libération. Les premiers volets 31 sont montés ici pivotant par rapport au carter externe 17 au niveau de leurs extrémités aval 31'. Ils pivotent alors vers l'intérieur en passant de leur position de fermeture vers leur position de libération de sorte qu'une fois en position de libération ils sont logés dans le conduit 27. Les premiers volets 31 n'intègrent donc pas ici de fonction écopante. Les seconds volets 32 sont par exemple également montés pivotant par rapport au carter externe 14 au niveau de leurs extrémités aval 32'. Ils pivotent alors vers l'extérieur en passant de leur position de fermeture vers leur position de libération de sorte qu'une fois en position de libération ils sont logés dans le conduit 27. Cette dernière configuration permet de réduire l'écoulement de flux d'air impactant les aubes à calage variable 18 en l'absence de décollement.

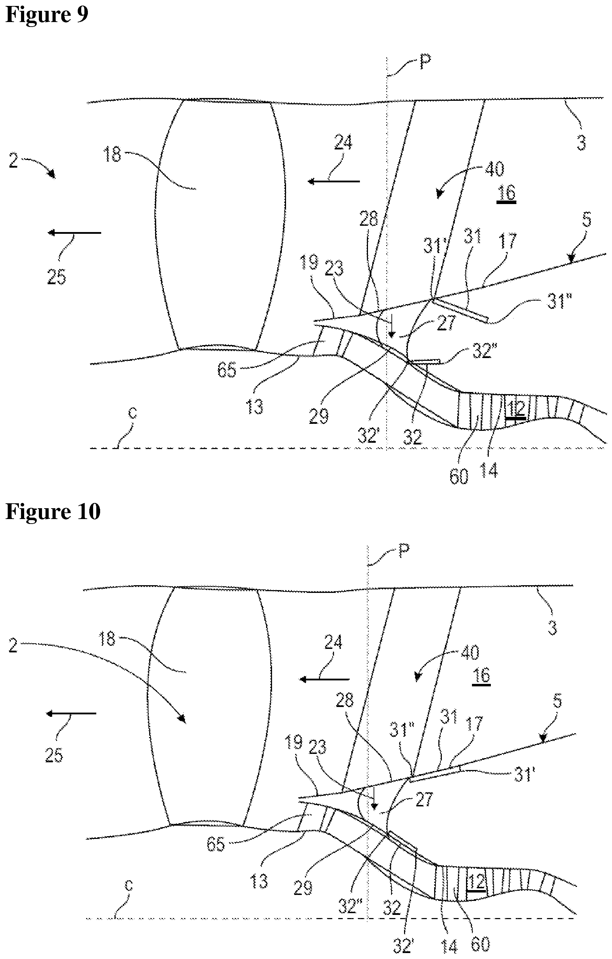

Selon le mode de réalisation illustré à la figure 9, les premiers et seconds volets 31, 32 sont toujours mobiles en pivotement entre leur position de fermeture et leur position de libération. Les premiers volets 31 sont notamment montés en pivot sur le carter externe 17 par l'intermédiaire de leur extrémité aval 31'. Ils pivotent ici vers l'extérieur en passant de leur position de fermeture jusqu'à leur position de libération jusqu'à s'encastrer dans le carter externe 17 et ne plus être présents dans la veine secondaire 16. De la même manière, les seconds volets 32 sont par exemple montés en pivot sur le carter interne 14 par l'intermédiaire de leur extrémité aval 32'. Ils pivotent ici vers l'intérieur en passant de leur position de fermeture jusqu'à leur position de libération jusqu'à s'encastrer dans le carter interne 14 et ne plus être présents dans la veine primaire 12.

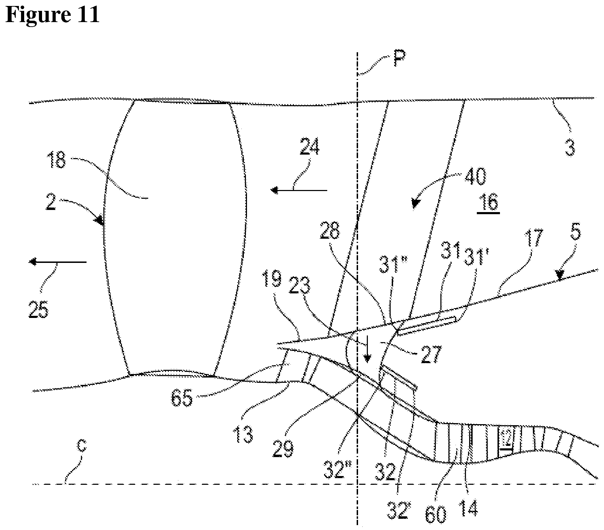

Selon les exemples de réalisation illustrés sur les figures 10 et 11, les volets 31, 32 sont par exemple mobiles en coulissement. Les volets 31, 32 sont notamment entraînés en coulissement par l'intermédiaire de vérins (non représentés).

Dans le mode de réalisation illustré sur la figure 10, les premiers volets 31 sont en particulier configurés pour coulisser le long d'une partie du carter externe 17 lors de leur déplacement depuis la position de fermeture jusqu'à la position de libération. Ce déplacement se fait notamment de l'amont vers l'aval. Les seconds volets 32 sont par exemple configurés pour coulisser le long d'une partie du carter interne 14 lors de leur déplacement depuis la position de fermeture jusqu'à la position de libération. Ce déplacement se fait en particulier de l'amont vers l'aval.

Selon une variante de réalisation illustrée à la figure 11, les premiers volets 31 sont configurés pour coulisser en s'insérant dans le carter externe 17 lors de leur déplacement depuis la position de fermeture jusqu'à la position de libération. Ce déplacement se fait notamment de l'amont vers l'aval. Les seconds volets 32 sont notamment configurés pour coulisser en s'insérant dans le carter interne 14 lors de leur déplacement depuis la position de fermeture jusqu'à la position de libération. Ce déplacement se fait en particulier de l'amont vers l'aval.

Selon les exemples illustrés, les translations ou coulissement se font de l'amont vers l'aval, mais il est entendu que l'invention couvre tous les modes de réalisation dans lesquels une translation des volets 31, 32 est effectuée selon toutes directions permettant de libérer l'accès aux ouvertures 28, 29, par exemple de l'aval vers l'amont.

Ces solutions de coulissement permettent notamment d'améliorer l'écoulement de la première partie de flux d'air 23 pour le générateur de gaz 5 sans détériorer l'écoulement pour les aubes à calage variable 18.

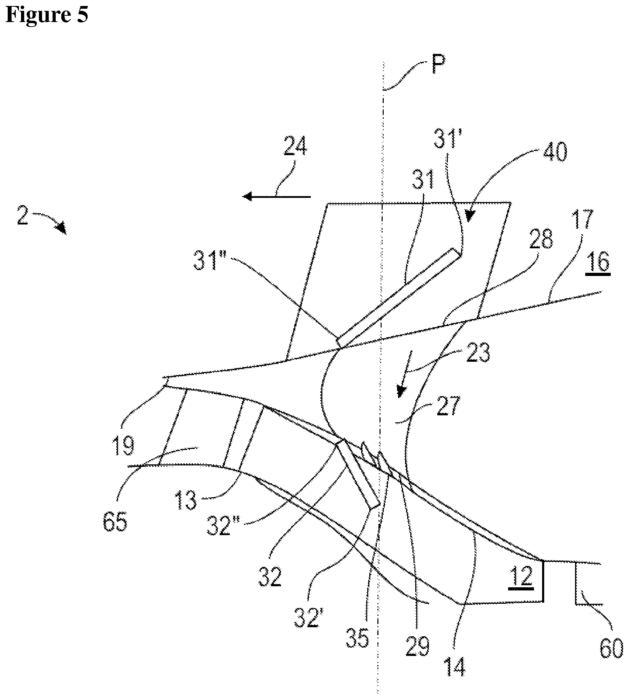

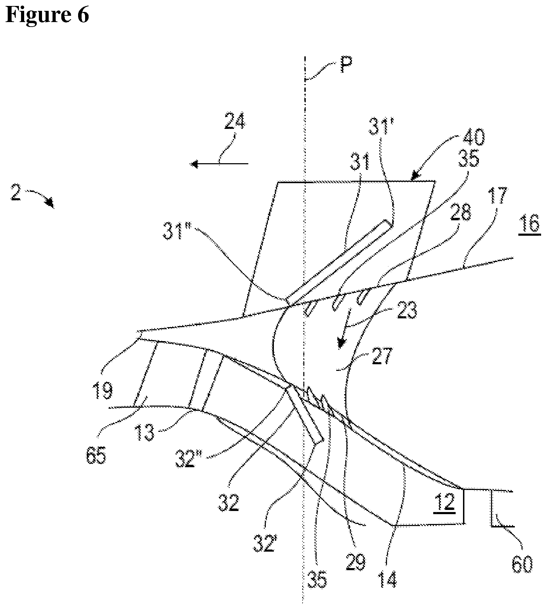

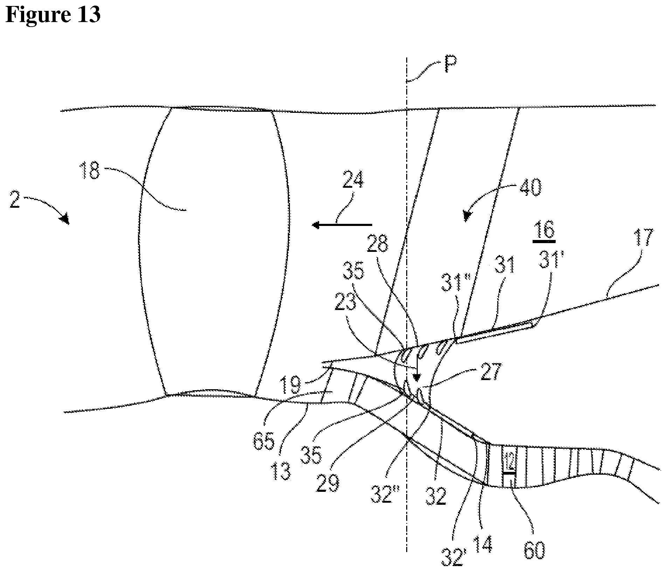

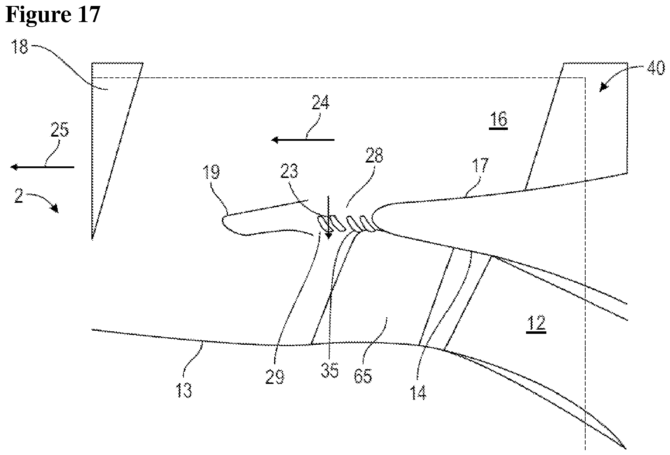

Des ailettes 35 de guidage (ou grilles redresseurs) sont par exemple situées dans les premières ouvertures 28 (comme illustrées sur les figures 6 et 13). Les ailettes 35 sont notamment présentes dans les secondes ouvertures 29 (comme illustrées sur les figures 5, 6, 8, 12, 13 et 17). Elles sont en particulier présentes entre les premières 28 et secondes ouvertures 29. Ces ailettes de guidage 35 ont pour fonction principale d'améliorer le guidage de la première partie de flux d'air 23, lorsqu'elle traverse le conduit 27. Les ailettes 35 permettent de mieux guider la première partie de flux d'air 23 car elles permettent de la redresser avant son arrivée dans la veine interne 12. Elles permettent notamment d'éviter un possible décollement lors du passage de la première partie 23 du flux secondaire inverse 24 dans le conduit 27. Les ailettes 35 ont étés illustrées avec certains modes de réalisation, mais il est bien évident que leurs différentes configurations mentionnées précédemment sont applicable à tous les modes de réalisation de l'invention.

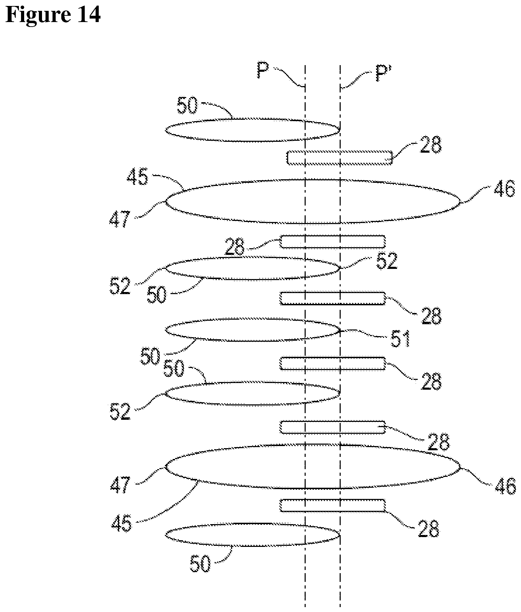

De la même manière, l'invention couvre également toutes les combinaisons de volets 31, 32 présentées précédemment, comme par exemple, des premiers volets 31 écopant associés à des seconds volets 32 non écopant. Comme illustré sur la figure 14, l'aubage statorique 40 comprend des bras structuraux 45 et des aubes de redressement 50 de flux, les bras 45 comportant des bords de fuite 46 en aval de bords de fuite 51 des aubes 50 par rapport au flux primaire. Les bras 45 et les aubes 50 comprennent également des bords d'attaques 47, 52, situés en amont des bords de fuite 46, 51 respectifs des bras 45 et des aubes 50.

Les premières ouvertures 28 sont situées entre les bras 45, c'est-à-dire circonférentiellement entre les bras 45. Elles peuvent être situées également entre un bras 45 et une aube 50. Les premières ouvertures 28 sont également situées au moins en partie en aval des bords de fuite 51 des aubes 50. L'aval des bords de fuites 51 des aubes 50 est défini par la zone située en aval du plan P' illustré à la figure 14.

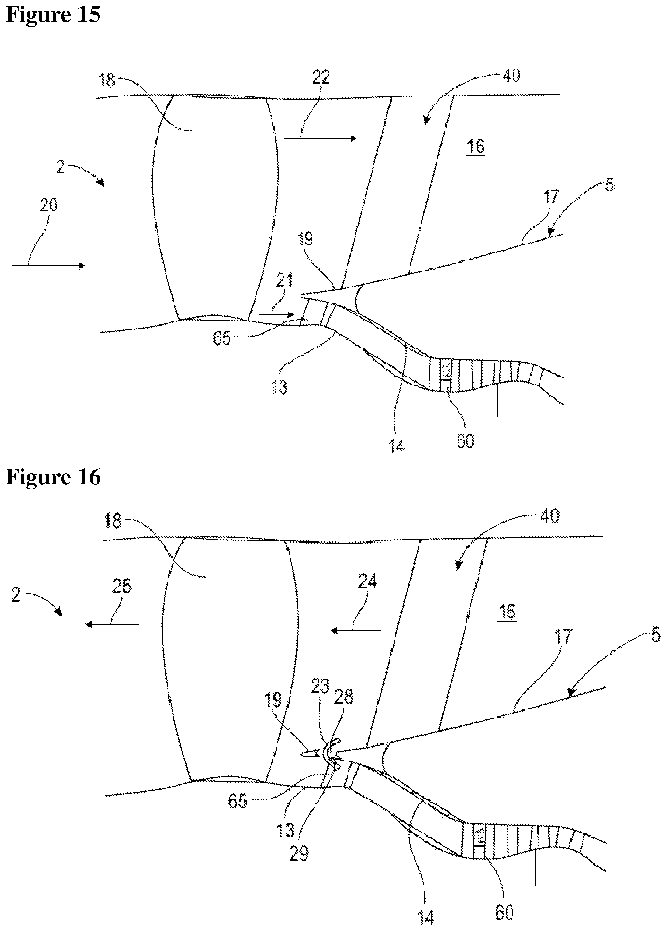

Comme illustré sur les figures 15 à 17, le bec 19 peut être mobile en translation par rapport au carter interne 14 et externe 17 entre une position de fermeture (figure 14) et une position de libération (figures 15 et 16). Le bec 19 se translate ici vers l'amont entre sa position de fermeture et sa position de libération de sorte qu'il crée les premières et secondes ouvertures 28, 29. Des ailettes 35 similaires à celle présentées précédemment peuvent également être positionnées dans les premières et/ou secondes ouvertures 28, 29, et/ou entre ces dernières. Les premières ouvertures 28 et les secondes ouvertures 29 peuvent ne pas se trouver ici selon la même abscisse axiale. En outre, les premières ouvertures 28 et les secondes ouvertures 29 peuvent se trouver plus ou moins proches du bec 29.

Le bec 29 peut ici être translaté sur 360°, c'est-à-dire sur toute sa circonférence, ou sur secteurs angulaires discrets. Dans le cas où le bec se translate sur 360°, le paramètre clé pour contrôler le débit de la première partie 23 du flux d'air secondaire inverse 24 est la longueur de la translation du bec. Dans le cas discrétisé, il y aura en plus l'occupation angulaire des secteurs (pourcentage de secteurs translatants par rapport aux secteurs fixes). Dans les deux modes de réalisation cités précédemment, les choix effectués pour les différents paramètres dépendront du besoin de débit du générateur de gaz 5 pendant le fonctionnement reverse.

## Revendications

1. Turbomachine (2) à double flux pour un aéronef, la turbomachine (2) comportant une soufflante (4) carénée et un générateur de gaz (5), la soufflante (4) étant configurée pour générer un flux primaire (21) d'air dans une veine primaire (12) à l'intérieur du générateur de gaz (5), et un flux secondaire (22) dans une veine secondaire (16) s'étendant autour du générateur de gaz (5) et à l'intérieur d'un carter de soufflante (3), la soufflante (4) comportant des aubes à calage variable (18) qui sont aptes à adopter une position d'inversion de poussée entraînant un écoulement d'un flux inverse (24) d'air dans la veine secondaire (16), le générateur de gaz (5) étant relié au carter de soufflante (3) par un aubage statorique (40) qui traverse la veine secondaire (16), le générateur de gaz (5) comportant deux carters annulaires (14, 17), respectivement externe (17) et interne (14), s'étendant l'un autour de l'autre, le carter externe (17) délimitant intérieurement au moins en partie la veine secondaire (16) et étant relié à l'aubage statorique (40), et le carter interne (14) délimitant extérieurement au moins en partie la veine primaire (12), la turbomachine (2) comportant en outre des premières ouvertures (28) d'entrée d'air du flux inverse (24) situées sur le carter externe (17), et des secondes ouvertures (29) de sortie de cet air situées sur le carter interne (14), au moins une partie desdites premières ouvertures (28) étant située dans un plan perpendiculaire à un axe longitudinal (C) de la turbomachine (2) passant dans une zone située au milieu dudit aubage (40) selon une direction axiale, et des volets (31, 32) étant prévus au niveau desdites premières (28) et secondes (29) ouvertures et étant mobiles entre des positions de fermeture et de libération de ces ouvertures, lesdits volets (31, 32) étant mobiles en pivotement, ayant une fonction écopante et étant configurés pour s'étendre au moins en partie dans ladite veine secondaire (16) lorsqu'ils sont en position de libération de sorte que les extrémités radialement externes (31', 32') des volets (31, 32) sont situées à une dimension radiale (h) dans la veine secondaire (16), ladite turbomachine (2) étant **caractérisée en ce que** la dimension radiale (h) représente entre 20 et 30% de la dimension radiale totale (H) de la veine secondaire (16), ces dimensions étant mesurées depuis le carter externe (17) au droit des extrémités radialement externes (31', 32').

2. Turbomachine (2) selon la revendication 1, dans laquelle des ailettes (35) de guidage sont situées dans lesdites premières ouvertures (28) et/ou dans lesdites secondes ouvertures (29) et/ou entre lesdites premières (28) et secondes ouvertures (29).

3. Turbomachine (2) selon l'une des revendications précédentes, dans laquelle l'aubage statorique (40) comprend des bras structuraux (45) et des aubes de redressement (50) de flux, les bras (45) comportant des bords de fuite (46) en aval des bords de fuites (51) des aubes (50) par rapport audit flux primaire (21), lesdites premières ouvertures (28) étant situées entre les bras (45) et au moins en partie en aval des bords de fuite (51) des aubes (50).

## Patentansprüche

1. Mantelstrom-Turbotriebwerk (2) für ein Flugzeug, wobei das Turbotriebwerk (2) ein ummanteltes Gebläse (4) und einen Gasgenerator (5) umfasst, wobei das Gebläse (4) so konfiguriert ist, dass es einen primären Luftstrom (21) **in einem** Primärkanal (12) im **Inneren des Gasgenerators** (5) erzeugt, und einen Sekundärstrom (22) in einem Sekundärkanal (16) erzeugt, **der sich um den** Gasgenerator (5) **und innerhalb eines Gebläsegehäuses** (3) erstreckt, wobei das Gebläse (4) Schaufeln mit veränderbarer Anstellung (18) aufweist, die geeignet **sind, eine Schubumkehrposition einzunehmen, die eine Strömung eines umgekehrten** Luftstroms (24) **in dem Sekundärkanal (16)** zur Folge hat, wobei der Gasgenerator (5) mit dem Gebläsegehäuse (3) durch eine Statorbeschaufelung (40) verbunden ist, die den Sekundärkanal (16) durchquert, wobei der Gasgenerator (5) zwei ringförmige Gehäuse (14, 17), jeweils ein äußeres (17) und ein inneres (14) Gehäuse, aufweist, **die sich umeinander** erstrecken, wobei das äußere Gehäuse (17) innen zumindest teilweise den Sekundärkanal (16) begrenzt und mit der **Statorbeschaufelung** (40) verbunden ist, und das innere Gehäuse (14) außen zumindest teilweise den Primärkanal (12) begrenzt, wobei das Turbotriebwerk (2) außerdem erste Öffnungen (28) **für den Eintritt von Luft aus dem umgekehrten Luftstrom** (24), die sich am Außengehäuse (17) befinden, und zweite Öffnungen (29) für den Austritt dieser Luft, die sich am Innengehäuse (14) befinden, umfasst, wobei mindestens ein Teil der ersten Öffnungen (28) in einer Ebene senkrecht zu einer Längsachse (C) des Turbotriebwerks (2) liegt, die in einem Bereich verläuft, der in der Mitte der Beschaufelung (40) in einer axialen Richtung liegt, und wobei Klappen (31, 32) an den ersten (28) und zweiten (29) Öffnungen vorgesehen sind und zwischen Positionen zum Schließen und Freigeben dieser Öffnungen beweglich sind, wobei die Klappen (31, 32) drehschwenkbar sind, eine schöpfende Funktion haben und so **konfiguriert sind, dass sie sich zumindest teilweise** in den Sekundärkanal (16) **erstrecken, wenn** sie sich in der Freigabeposition befinden, so dass die radial äußeren Enden (**31', 32')** der Klappen (31, 32) in einer radialen Abmessung (h) in dem Sekundärkanal (16) angeordnet sind, wobei das Turbotriebwerk (2) **dadurch gekennzeichnet ist, dass** die radiale Abmessung (h) zwischen 20 und 30 % der gesamten radialen Abmessung (H) des Sekundärkanals (16) beträgt, wobei diese Abmessungen von dem äußeren Gehäuse (17) aus zu den radial äußeren Enden (**31',32'**) gemessen werden.

2. Turbotriebwerk (2) nach Anspruch 1, wobei Leitschaufeln (35) in den ersten Öffnungen (28) und/oder in den zweiten Öffnungen (29) und/oder zwischen den ersten (28) und zweiten (29) Öffnungen angeordnet sind.

3. Turbotriebwerk (2) **nach einem der vorstehenden Ansprüche, wobei die Statorbeschaufelung (**40) Strukturarme (45) und Strömungsgleichrichtungsschaufeln (50) umfasst, wobei die Arme (45) Abströmkanten (46) stromabwärts der Abströmkanten (51) der Schaufeln (50) in Bezug auf den Primärstrom (21) aufweisen, wobei die ersten Öffnungen (28) zwischen den Armen (45) und zumindest teilweise stromabwärts der Abströmkanten (51) der Schaufeln (50) angeordnet sind.

## Claims

1. A bypass turbomachine (2) for an aircraft, the turbomachine (2) comprising a ducted fan (4) and a gas generator (5), the fan (4) being configured to generate a primary flow (21) of air in a primary duct (12) inside the gas generator (5) and a secondary flow (22) in a secondary duct (16) extending around the gas generator (5) and inside a fan casing (3), the fan (4) comprising variable pitch vanes (18) which are able to adopt a reverse thrust position driving a flow of a reverse flow (24) of air in the secondary duct (16), the gas generator (5) being connected to the fan casing (3) by a stator vane assembly (40) which passes through the secondary duct (16), the gas generator (5) comprising two annular casings (14, 17), outer (17) and inner (14) respectively, extending around each other, the outer casing (17) at least partially internally delimiting the secondary duct (16) and being connected to the stator vane assembly (40), and the inner casing (14) at least partially externally delimiting the primary duct (12), the turbomachine (2) further comprising first openings (28) for letting in air from the reverse flow (24) being located on the outer casing (17), and second openings (29) for letting this air out being located on the inner casing (14), at least one portion of said first openings (28) being located in a plane perpendicular to a longitudinal axis (C) of the turbomachine (2) passing through an area located in the middle of said vane assembly (40) along an axial direction, and flaps (31, 32) being provided at the level of said first (28) and second (29) openings and being movable between positions of closure and of release of these openings, said flaps (31, 32) being pivotally movable, having a scooping function and being configured to extend at least partially into said secondary duct (16) when in the release position so that the radially outer ends (31', 32') of the flaps (31, 32) are located at a radial dimension (h) in the secondary duct (16), said bypass turbomachine (2) being **characterised in that** the radial dimension (h) is between 20 and 30% of the total radial dimension (H) of said duct (16), said dimensions being measured from the outer casing (17) in line with these radially outer ends (31', 32').

2. The turbomachine (2) according to claim 1, wherein guide fins (35) are located in said first openings (28) and/or in said second openings (29) and/or between said first (28) and second openings (29).

3. The turbomachine (2) according to any of the preceding claims, wherein the stator vane assembly (40) comprises structural arms (45) and flow straightening vanes (50), the arms (45) comprising trailing edges (46) downstream of the trailing edges (51) of the vanes (50) with respect to said primary flow (21), said first openings (28) being located between the arms (45) and at least partially downstream of the trailing edges (51) of the vanes (50).
